# EUROPÄISCHE PATENTSCHRIFT

(11) **EP 1 735 405 B1**
(45) Veröffentlichungstag und Bekanntmachung des Hinweises auf die Patenterteilung: **03.08.2016**
(21) Anmeldenummer: 05742230.5
(22) Anmeldetag: 13.04.2005
(51) Int. Cl.: C09K 11/78, C09K 11/80, C09K 11/81, C09K 11/77, H01J 61/44

(54) **LEUCHTSTOFFZUSAMMENSETZUNG FÜR EINE NIEDERDRUCKENTLADUNGSLAMPE MIT SEHR HOHER FARBTEMPERATUR**
FLUORESCENT COMPOSITION FOR A LOW-PRESSURE DISCHARGE LAMP HAVING A VERY HIGH COLOR TEMPERATURE
COMPOSITION LUMINESCENTE POUR LAMPE A DECHARGE BASSE PRESSION A TEMPERATURE DE COULEUR TRES ELEVEE

(30) Priorität: 16.04.2004 DE 102004018590
(43) Veröffentlichungstag der Anmeldung: 27.12.2006
(73) Patentinhaber: OSRAM GmbH, 80807 München (DE)
(72) Erfinder: KONRAD, Armin, 86845 Grossaitingen (DE); ZACHAU, Martin, 82269 Geltendorf (DE)
(74) Vertreter: Raiser, Franz
(86) Internationale Anmeldenummer: PCT/DE2005/000666
(87) Internationale Veröffentlichungsnummer: WO 2005/100508

(56) Entgegenhaltungen:
- EP-A- 1 274 120
- WO-A-2004/021397
- DE-A1- 10 058 852
- DE-A1- 10 122 850
- US-A- 4 847 533
- US-A- 5 156 764
- US-A- 5 166 456
- US-A- 5 471 113
- US-A- 6 144 152

## Beschreibung

### Technisches Gebiet

Die Erfindung geht aus von einer Leuchtstoffzusammensetzung für eine Niederdruckentladungslampe mit hoher Lichtausbeute und hoher Farbtemperatur. Die Leuchtstoffzusammensetzung weist dafür
im roten Wellenlängenbereich emittierenden Leuchtstoffe aus der Gruppe Yttriumoxid dotiert mit Europium oder Gadolinium-Zink-Magnesium-Pentaborat dotiert mit Cer und Mangan,
im grünen Wellenlängenbereich emittierende Leuchtstoffe aus der Gruppe Lanthan-Phosphat dotiert mit Cer und Terbium und/oder Cer-Magnesiumaluminat dotiert mit Terbium und/oder oder Cer-Magnesium-Pentaborat dotiert mit Terbium und
eventuell einen im blauen Wellenlängenbereich emittierenden Leuchtstoff vom Typ Barium-Magnesiumaluminat dotiert mit Europium auf.

### Stand der Technik

Der Anwender von Niederdruckentladungslampen, seien es nun gerade Leuchtstofflampen oder Kompakt-Leuchtstofflampen, ist neuerdings vermehrt daran interessiert, Lampen zu erhalten, die bei Betrieb eine belebende Wirkung auf den Organismus haben. Messungen haben nun gezeigt, dass auch der sichtbare Teil des elektromagnetischen Spektrums physiologische Auswirkungen auf den menschlichen Organismus hat. Insbesondere hat sich herausgestellt, dass das menschliche Auge Rezeptoren enthält, die mit der Steuerung des Hormonhaushalts des Schlafhormons Melatonin in Wirkverbindung stehen. Diese Rezeptoren sind vor allem im Blaubereich empfindlich, wobei die maximale Empfindlichkeit etwa im Bereich von 450 - 470 nm liegt.

Es galt daher nach Leuchtstoffzusammensetzungen zu suchen, die dieser Forderung gerecht werden. Gleichzeitig sollte jedoch der allgemeine Farbwiedergabeindex, den die bisher üblichen Leuchtstofflampen aufweisen, keine wesentliche Abnahme erfahren. Neben der Anforderung nach einer guten Farbwiedergabe sollte auch der von der Lampe abgegebene Lichtstrom möglichst hoch sein. Die Schwierigkeit liegt nun darin, dass hoher Lichtstrom und sehr gute Farbwiedergabe gegenläufige Anforderungen sind, weil ein hoher Lichtstrom eine maximale Lichtintensität im Grünen fordert, gute Farbwiedergabe aber eine der Schwarzkörperstrahlung ähnliche Verteilung der Lichtintensität auf allen Wellenlängen voraussetzt und somit der ersten Forderung entgegensteht.

Die EP 1 274 120 A2 offenbart eine langlebige Leuchtstofflampe mit einer im roten Wellenlängenbereich emittierenden Leuchtstoffkomponente, die vorzugsweise mit Europium dotiertes Yttriumoxid umfasst, und einer im grünen Wellenlängenbereich emittierenden Leuchtstoffkomponente, die vorzugsweise mit Cer und Terbium dotiertes Lanthanphosphat umfasst, sowie mit einer im blauen Wellenlängenbereich emittierenden Leuchtstoffkomponente, die vorzugsweise mit Europium dotiertes Kalzium-Strontium-Barium-Chloroapatit umfasst.

### Darstellung der Erfindung

Diese Aufgabe wird bei einer Leuchtstoffzusammensetzung mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Die Grundidee der Erfindung besteht darin, bei einer Niederdruckentladungslampe im Vergleich zu einer hinsichtlich der elektrischen Daten vergleichbaren konventionellen Niederdruckentladungslampe eine verstärkte aktivierende Wirkung auf den menschlichen Organismus vorzusehen. Diese Wirkung wird durch eine Erhöhung des relevanten Blauanteils erfolgen, was hier über den als technische Größe eingeführten sogenannten circadianen Wirkfaktor definiert wird. Dieser circadiane Wirkfaktor beschreibt das Verhältnis des mit einer angenommenen Empfindlichkeitskurve ermittelten aktivierenden Anteils der abgestrahlten Strahlungsleistung zu dem Gesamtlichtstrom. Dabei ist der

Lichtstrom die mit der spektralen Augenempfindlichkeit (hinsichtlich der normalen Helligkeitsempfindung) bewertete Strahlungsleistung. Es handelt sich also um das Verhältnis zweier Integrale über die Strahlungsleistung, im einen Fall mit der Gewichtungsfunktion der circadianen Wirkung auf die aktivierenden Lichtrezeptoren und im anderen Fall (beim Lichtstrom) mit der spektralen Helligkeitsempfindlichkeit des menschlichen Auges.

Der Begriff des circadianen Wirkfaktors und auch der Begriff des Lichtstromes sind an sich eingeführte technische Größen. Es wird Bezug genommen auf die Definition in der Veröffentlichung von Prof. Dr. Dietrich Gall in der Zeitschrift "LICHT", Ausgabe 7-8, 2002. Dennoch muss darauf hingewiesen werden, dass die zugrundeliegenden physiologischen Mechanismen von verschiedenen Parametern abhängen, also beispielsweise dass das dunkeladaptierte Auge abweichend vom helladaptierten Auge reagiert. Es bestehen auch unterschiedliche wissenschaftliche Ansichten über Einzelheiten der richtigen circadianen Wirksamkeitsverteilung im Blauspektrum, insbesondere abhängig von der Hell-Dunkel-Adaption, die hier jedoch nicht weiter erörtert werden sollen.

Die Erfindung hat dabei zusätzlich den Vorteil, dass die Lampe nicht nur erfrischend wirkt und die körperliche und geistige Leistungsbereitschaft steigert, sondern vom Verwender auch als subjektiv frischer empfunden wird. Dies liegt an dem in Folge des verstärkten Blauanteils weißeren Lichts. Damit kann ein kontrastreicheres und ermüdungsfreieres Sehen und insbesondere Lesen und eine frischere und natürlichere Farbwiedergabe erzielt werden. Die ursprünglichen Funktionen der Niederdruckentladungslampe werden also bei der Erfindung nicht nur erhalten sondern bei entsprechender Auslegung sogar noch verbessert. Bevorzugt sind insbesondere Farbtemperaturen von 8000 K und Farbwiedergabeindexwerte Rₐ von größer 80. Durch Zugabe entsprechender Blauleuchtstoffe sind auch Farbtemperaturen bis zu 20000 K denkbar. Der Farbwiedergabeindex ist ebenfalls eine eingeführte Größe und bezeichnet das Maß der Übereinstimmung der Körperfarbe mit ihrem Aussehen und der Beleuchtung durch die entsprechende Lampe. Dazu werden Farbverschiebungen nach acht in der deutschen Industrienorm DIN 6169 genormten Testfarben bestimmt und ein entsprechender Indexwert berechnet. Eine theoretische optimale Lampe erzielt einen Wert von Rₐ = 100.

Messungen haben nun gezeigt, dass durch die Hinzunahme des im blauen Wellenlängenbereich emittierenden, mit Mangan und Europium dotierten Mangan-Strontium-Barium-Magnesiumaluminat-Leuchtstoffs ein circadianer Wirkfaktors zwischen 0,8 und 1,2 erreicht werden kann.

Zur Erzielung eines besonders hohen circadianen Wirkfaktors mit gleichzeitig einem Farbwiedergabeindex Rₐ von größer 80 liegt der Gewichtsanteil des mit Europium dotierten Yttriumoxid-Leuchtstoffs vorteilhaft zwischen 30 bis 50 % , vorzugsweise besser zwischen 35 bis 41 %.

Wird als Rotleuchtstoff neben dem mit Europium dotierten Yttriumoxid-Leuchtstoff auch mit Cer und Mangan dotierter Gadolinium-Zink-Magnesium-Pentaborat-Leuchtstoff zugegeben, so liegt vorteilhaft der Gewichtsanteil des mit Cer und Mangan dotierten Gadolinium-Zink-Magnesium-Pentaborat-Leuchtstoffs zwischen 5 und 30 %.

Als grüne Leuchstoffkomponente findet vorteilhaft ein Leuchtstoff oder eine Leuchtstoffkombination aus der Gruppe Lanthanphosphat dotiert mit Cer und Terbium und/oder Cer-Magnesiumaluminat dotiert mit Terbium und/oder Cer-Magnesium-Pentaborat dotiert mit Terbium. Der Gewichtsanteil des mit Cer und Terbium dotierten Lanthanphosphat-Leuchtstoffs sollte dabei zwischen 22 bis 40 %, vorzugsweise zwischen 30 bis 34 % liegen.

Als blaue Leuchtstoffkomponente kann eventuell ein mit Europium dotierter Barium-Magnesium-Aluminat-Leuchtstoff verwendet werden, wobei der Gewichtsanteil an der gesamten Leuchtstoffzusammensetzung vorteilhaft zwischen 10 bis 20 % , besser zwischen 13 bis 17 % sein sollte.

Als zusätzliche blaue bzw. blaugrüne Leuchtstoffkomponente beinhaltet die Leuchtstoffzusammensetzung zusätzlich zumindest einen Leuchtstoff aus der Gruppe Mangan-Strontium-Barium-Magnesiumaluminat dotiert mit Mangan und Europium oder Barium-Magnesiumaluminat dotiert mit Europium und Mangan oder Strontium-Aluminat dotiert mit Europium oder Strontium-Barium-Calcium-Chloroapatit dotiert mit Europium oder Strontium-BoroPhosphat dotiert mit Europium.

Der Gewichtsanteil des mit Mangan und Europium dotierten Mangan-Strontium-Barium-Magnesiumaluminat-Leuchtstoffs liegt dabei zwischen 10 und 20 %, vorteilhaft zwischen 13 und 17 %.

Für den mit Europium und Mangan dotierten Barium-Magnesiumaluminat-Leuchtstoff liegt der Gewichtsanteil vorteilhaft zwischen 7 und 35 %, besser zwischen 10 und 30 %.

Vorteilhaft sollte der Gewichtsanteil im Fall des mit Europium dotierten Strontiumaluminat-Leuchtstoffs zwischen 3 und 15 %, besser zwischen 4 und 10 % liegen.

Für den mit Europium dotierten Strontium-Borophosphat-Leuchtstoff sollte der Gewichtsanteil an der Leuchtstoffzusammensetzung bevorzugt zwischen 3 und 15, besser zwischen 4 und 10 % liegen.

Es ist auch möglich als zusätzliche blaugrüne Komponente an der Leuchtstoffzusammensetzung einen mit Europium und Mangan dotierten Barium-Magnesiumaluminat-Leuchtstoff mit einem Gewichtsanteil zwischen 3 und 20 % besser zwischen 5 und 15 % und einen mit Europium dotierten Strontium-Barium-Calcium-Chloroapatit-Leuchtstoff mit einem Gewichtsanteil zwischen 20 und 35 % besser zwischen 25 und 32 % zu verwenden.

Die Leuchtstoffzusammensetzung ist bevorzugt in Form einer einzigen Leuchtstoffmischung auf den Innenseite des Entladungsgefäßes aufgebracht und besteht dabei aus einer einzigen Schicht. Es kann aber auch von Vorteil sein, die Leuchtstoffbeschichtung in Form von mehreren Schichten aufzubringen.

Zusätzlich kann zwischen der Innenseite des Entladungsgefäßes und der Leuchtstoffschicht bzw. Schichten eine Schutzschicht aus Al₂O₃, Y₂O₃ oder einem Seltenerdoxid aufgebracht sein.

### Beschreibung der Zeichnungen

Im folgenden soll die Erfindung anhand von Ausführungsbeispielens näher erläutert werden.

Es wird daher eine erfindungsgemäße Leuchtstoffzusammensetzung für eine T8-Leuchtstofflampe mit 26 mm Rohrdurchmesser und einer Leistungsaufnahme von 58 W näher betrachtet werden.

Die Leuchtstoffschicht auf der Innenwand des rohrförmigen Entladungsgefäßes besteht aus 38 Gew. % mit Europium dotierten Yttriumoxid-Leuchtstoff, 32 Gew. % mit Cer und Terbium dotierten Lanthanphosphat-Leuchtstoff, 15 Gew. % mit Europium dotierten Bariummagnesiumaluminat-Leuchtstoff und 15 Gew. % mit Mangan und Europium dotierten Mangan-Strontium-Barium-Magnesiumaluminat-Leuchtstoff.

Die Leuchtstofflampe weist eine Farbtemperatur von 8000 K und einen Farbwiedergabeindex von größer 80 auf. Mit dieser Beschichtung wird ein circadianer Wirkungsfaktor von 1,0 erreicht.

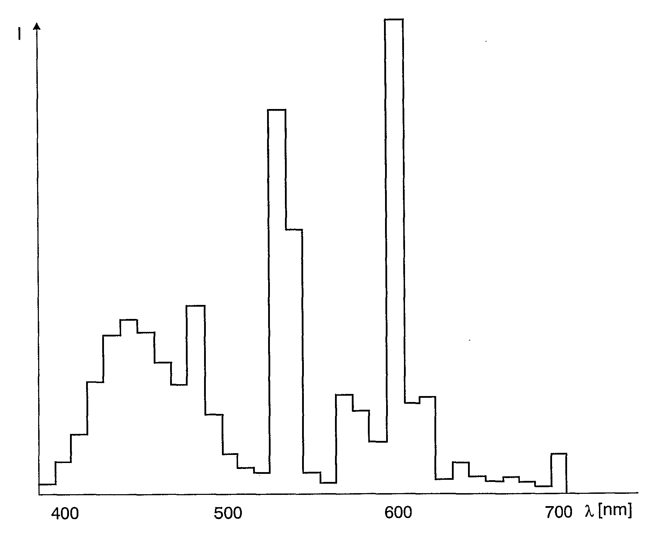

In der Figur ist das Spektrum der Leuchtstoffzusammensetzung dieser Lampe aufgezeigt, wobei die relative Intensität in Bezug zur Wellenlänge in nm gesetzt ist.

Eine Leuchtstoffzusammensetzung, die als blaugrünen Leuchtstoff einen mit Mangan und Europium dotierten Barium-Magnesiumaluminat-Leuchtstoff beinhaltet weist bevorzugt folgende Gewichtsanteile auf:

| | |
|---|---|
| 37 Gew.% | Yttriumoxid: Eu |
| 30 Gew.% | Lanthanphosphat: Ce, Tb |
| 16 Gew.% | Barium-Magnesiumaluminat: Eu |
| 16 Gew.% | Barium-Magnesiumaluminat: Mn, Eu |

Für eine erfindungsgemäße Leuchtstoffzusammensetzung mit mit Europium dotiertem Strontiumaluminat als grünblauer Leuchtstoffkomponente ergeben sich folgende Gewichtsprozente:

| | |
|---|---|
| 37 Gew.% | Yttriumoxid: Eu |
| 30 Gew.% | Lanthanphosphat: Ce, Tb |
| 26 Gew.% | Barium-Magnesiumaluminat: Eu |
| 7 Gew.% | Strontiumaluminat: Eu |

Im Falle von Strontium-Borophösphat dotiert mit Europium als blaugrüne vierte Leuchtstoffkomponente ergibt sich folgende Gewichtszusammensetzung:

| | |
|---|---|
| 39 Gew.% | Yttriumoxid: Eu |
| 28 Gew.% | Lanthanphosphat: Ce, Tb |
| 26 Gew.% | Barium-Magnesiumaluminat: Eu |
| 7 Gew.% | Strontium-Borophosphat: Eu |

Bei Verwendung von Barium-Magnesiumaluminat dotiert mit Mangan und Europium und Strontium-Barium-Calcium-Chloroapatit dotiert mit Eu als blaugrüne Komponenten und Weglassen von Barium-Magnesiumaluminat dotiert mit Eu als blaue Komponente hat sich folgende Zusammensatzung als optimal erwiesen:

| | |
|---|---|
| 37 Gew.% | Yttriumoxid: Eu |
| 28 Gew.% | Lanthanphosphat: Ce, Tb |
| 7 Gew.% | Barium-Magnesiumaluminat: Mn, Eu |
| 28 Gew.% | Strontium-Barium-Calcium-Chloroapatit: Eu |

## Patentansprüche

1. Leuchtstoffzusammensetzung für eine Niederdruckentladungslampe mit hoher Lichtausbeute und hoher Farbtemperatur, wobei die Leuchtstoffzusammensetzung
- im roten Wellenlängenbereich emittierende Leuchtstoffe beinhaltet, die mit Europium dotiertes Yttriumoxid umfassen,
- im grünen Wellenlängenbereich emittierende Leuchtstoffe beinhaltet, die mit Cer und Terbium dotiertes Lanthanphosphat umfassen, und
- zusätzlich mindestens einen im blauen bzw. blaugrünen Wellenlängenbereich emittierenden Leuchtstoff beinhaltet,
**dadurch gekennzeichnet, dass**
- der Gewichtsanteil des mit Europium dotierten Yttriumoxid-Leuchtstoffs zwischen 30% bis 50 % liegt,
- der Gewichtsanteil des mit Cer und Terbium dotierten Lanthanphosphat-Leuchtstoffs zwischen 22% bis 40 % liegt, und
- der mindestens eine, im blauen bzw. blaugrünen Wellenlängenbereich emittierende Leuchtstoff
- mit Europium und Mangan dotiertes Barium-Magnesiumaluminat mit einem Gewichtsanteil zwischen 7% und 35%, oder
- mit Europium und Mangan dotiertes Mangan-Strontium-Barium-Magnesiumaluminat mit einem Gewichtsanteil zwischen 10% und 20%, oder
- mit Europium dotiertes Strontiumaluminat mit einem Gewichtsanteil zwischen 3% und 15%, oder
- mit Europium dotiertes Strontium-Borophosphat mit einem Gewichtsanteil zwischen 3% und 15% ist.

2. Leuchtstoffzusammensetzung nach Anspruch 1, wobei der Gewichtsanteil des mit Europium dotierten Yttriumoxid-Leuchtstoffs zwischen 35% bis 41 % liegt.

3. Leuchtstoffzusammensetzung nach Anspruch 1, wobei als weiterer, im roten Wellenlängenbereich emittierender Leuchtstoff mit Cer und Mangan dotiertes Gadolinium-Zink-Magnesium-Pentaborat mit einem Gewichtsanteil zwischen 5% und 30% vorhanden ist.

4. Leuchtstoffzusammensetzung nach Anspruch 1, wobei der Gewichtsanteil des mit Cer und Terbium dotierten Lanthanphosphats zwischen 30% bis 34% liegt.

5. Leuchtstoffzusammensetzung nach Anspruch 1, wobei die Leuchtstoffzusammensetzung einen im blauen Wellenlängenbereich emittierenden Leuchtstoff des Typs Barium-Magnesiumaluminat dotiert mit Europium beinhaltet.

6. Leuchtstoffzusammensetzung nach Anspruch 1, wobei der Gewichtsanteil des mit Europium und Mangan dotierten Barium-Magnesiumaluminat-Leuchtstoffs zwischen 10% und 30% liegt.

7. Leuchtstoffzusammensetzung nach Anspruch 1, wobei der Gewichtsanteil des mit Mangan und Europium dotierten Mangan-Strontium-Barium-Magnesiumaluminat-Leuchtstoffs zwischen 13% und 17% liegt.

8. Leuchtstoffzusammensetzung nach Anspruch 1, wobei der Gewichtsanteil des mit Europium dotierten Strontiumaluminat-Leuchtstoffs zwischen 4% und 10% liegt.

9. Leuchtstoffzusammensetzung nach Anspruch 1, wobei der Gewichtsanteil des mit Europium dotierten Strontium-Borophosphat-Leuchtstoffs zwischen 4% und 10 % liegt.

10. Leuchtstoffzusammensetzung nach Anspruch 1, wobei die Leuchtstoffzusammensetzung als im blaugrünen Wellenlängenbereich emittierende Leuchtstoffkomponenten den mit Europium und Mangan dotierten Barium-Magnesiumaluminat-Leuchtstoff mit einem Gewichtsanteil zwischen 7% und 20% und einen mit Europium dotierten Strontium-Barium-Calcium-Chloroapatit-Leuchtstoff mit einem Gewichtsanteil zwischen 20% und 35% beinhaltet.

11. Leuchtstoffzusammensetzung nach Anspruch 1, wobei die im grünen Wellenlängenbereich emittierenden Leuchtstoffe mit Terbium dotiertes Cer-Magnesiumaluminat oder bzw. und mit Terbium dotiertes Cer-Magnesium-Pentaborat umfassen.

12. Leuchtstoffzusammensetzung nach Anspruch 1, wobei die Leuchtstoffzusammensetzung in einer Schicht auf der Innenoberfläche des Entladungsgefäßes der Niederdruckentladungslampe aufgebracht ist.

13. Leuchtstoffzusammensetzung nach Anspruch 1, wobei die Leuchtstoffzusammensetzung in mehreren Schichten auf der Innenoberfläche des Entladungsgefäßes der Niederdruckentladungslampe aufgebracht ist.

## Claims

1. Phosphor composition for a low-pressure discharge lamp with a high light yield and a high color temperature, the phosphor composition containing
- phosphors which emit in the red wavelength region and comprise yttrium oxide doped with europium,
- phosphors which emit in the green wavelength region and comprise lanthanum phosphate doped with cerium and terbium, and
- additionally at least one phosphor which emits in the blue or blue-green wavelength region,
**characterized in that**
- the europium-doped yttrium oxide phosphor forms between 30% and 50% by weight,
- the cerium- and terbium-doped lanthanum phosphate phosphor forms between 22% and 40% by weight, and
- the at least one phosphor which emits in the blue or blue-green wavelength region is europium- and manganese doped barium-magnesium aluminate forming between 7% and 35% by weight, or
- europium- and manganese-doped manganese-strontium-barium-magnesium aluminate forming between 10% and 20% by weight, or
- the europium-doped strontium aluminate forming between 3% and 15% by weight, or
- europium-doped strontium borophosphate forming between 3% and 15% by weight.

2. Phosphor composition according to Claim 1, wherein the europium-doped yttrium oxide phosphor forms between 35% and 41% by weight.

3. Phosphor composition according to Claim 1, wherein cerium- and manganese-doped gadolinium-zinc-magnesium pentaborate forming between 5% and 30% by weight is present as a further phosphor which emits in the red wavelength region.

4. Phosphor composition according to Claim 1, wherein the cerium- and terbium-doped lanthanum phosphate forms between 30% and 34% by weight.

5. Phosphor composition according to Claim 1, wherein the phosphor composition contains a phosphor barium-magnesium aluminate doped with europium of the type which emits in the blue or blue-green wavelength region.

6. Phosphor composition according to Claim 1, wherein the europium- and manganese-doped barium-magnesium aluminate phosphor forms between 10% and 30% by weight.

7. Phosphor composition according to Claim 1, wherein the manganese- and europium-doped manganese-strontium-barium-magnesium aluminate phosphor forms between 13% and 17% by weight.

8. Phosphor composition according to Claim 1, wherein the europium-doped strontium aluminate phosphor forms between 4% and 10% by weight.

9. Phosphor composition according to Claim 1, wherein the europium-doped strontium borophosphate phosphor forms between 4% and 10% by weight.

10. Phosphor composition according to Claim 1, wherein its phosphor components which emit the blue-green wavelength region contain the europium- and manganese-doped barium-magnesium aluminate phosphor forming between 7% and 20% by weight and a europium-doped strontium-barium-calcium chloroapatite phosphor forming between 20% and 35% by weight.

11. Phosphor composition according to Claim 1, wherein the phosphors which emit in the green wavelength region comprise terbium-doped cerium-magnesium aluminate and/or terbium-doped cerium-magnesium pentaborate.

12. Phosphor composition according to Claim 1, wherein it is applied in one layer to the inner surface of the discharge vessel of the low-pressure discharge lamp.

13. Phosphor composition according to Claim 1, wherein it is applied in a plurality of layers to the inner surface of the discharge vessel of the low-pressure discharge lamp.

## Revendications

1. Composition luminescente pour lampe à décharge basse pression à haut rendement lumineux et à température de couleur élevée, dans laquelle la composition luminescente
- contient des substances luminescentes émettant dans le domaine de longueur d'onde rouge, qui comprennent de l'oxyde d'yttrium dopé à l'europium,
- contient des substances luminescentes émettant dans le domaine de longueur d'onde vert, qui comprennent du phosphate de lanthane dopé au cérium et au terbium,
- contient en plus au moins une substance luminescente émettant dans le domaine de longueur d'onde bleu resp. vert-bleu,
**caractérisée en ce que**
- la fraction pondérale de la substance luminescente d'oxyde d'yttrium dopé à l'europium vaut entre 30 % et 50 %,
- la fraction pondérale de la substance luminescente de phosphate de lanthane dopé au cérium et au terbium vaut entre 22 % et 40 %, et
- ladite au moins une substance luminescente émettant dans le domaine de longueur d'onde bleu resp. vert-bleu est
- l'aluminate de baryum-magnésium dopé à l'europium et au manganèse avec une fraction pondérale comprise entre 7 % et 35 %, ou
- l'aluminate de manganèse-strontium-baryum-magnésium dopé à l'europium et au manganèse avec une fraction pondérale comprise entre 10 % et 20 %, ou
- l'aluminate de strontium dopé à l'europium avec une fraction pondérale comprise entre 3 % et 15 %, ou
- le borophosphate de strontium dopé à l'europium avec une fraction pondérale comprise entre 3 % et 15 %.

2. Composition luminescente selon la revendication 1, dans laquelle la fraction pondérale de la substance luminescente d'oxyde d'yttrium dopé à l'europium est comprise entre 35 % et 41 %.

3. Composition luminescente selon la revendication 1, dans laquelle il se trouve, comme autre substance luminescente émettant dans le domaine de longueur d'onde rouge, du pentaborate de gadolinium-zinc-magnésium dopé au cérium et au manganèse, avec une fraction pondérale comprise entre 5 % et 30 %.

4. Composition luminescente selon la revendication 1, dans laquelle la fraction pondérale du phosphate de lanthane dopé au cérium et au terbium est comprise entre 30 % et 34 %.

5. Composition luminescente selon la revendication 1, dans laquelle la composition luminescente contient une substance luminescente émettant dans le domaine de longueur d'onde bleu de type aluminate de baryum-magnésium dopé à l'europium.

6. Composition luminescente selon la revendication 1, dans laquelle la fraction pondérale de la substance luminescente d'aluminate de baryum-magnésium dopé à l'europium et au manganèse est comprise entre 10 % et 30 %.

7. Composition luminescente selon la revendication 1, dans laquelle la fraction pondérale de la substance luminescente d'aluminate de manganèse-strontium-baryum-magnésium dopé au manganèse et à l'europium est comprise entre 13 % et 17 %.

8. Composition luminescente selon la revendication 1, dans laquelle la fraction pondérale de la substance luminescente d'aluminate de strontium dopé à l'europium est comprise entre 4 % et 10 %.

9. Composition luminescente selon la revendication 1, dans laquelle la fraction pondérale de la substance luminescente de borophosphate de strontium dopé à l'europium est comprise entre 4 % et 10 %.

10. Composition luminescente selon la revendication 1, dans laquelle la composition luminescente contient, comme composant luminescent émettant dans le domaine de longueur d'onde vert-bleu, la substance luminescente d'aluminate de baryum-magnésium dopé à l'europium et au manganèse avec une fraction pondérale comprise entre 7 % et 20 % et une substance luminescente de chlorapatite de strontium-baryum-calcium dopé à l'europium avec une fraction pondérale comprise entre 20 % et 35 %.

11. Composition luminescente selon la revendication 1, dans laquelle les substances luminescentes émettant dans le domaine de longueur d'onde vert comprennent l'aluminate de cérium-magnésium dopé au terbium ou resp/et le pentaborate de cérium-magnésium dopé au terbium.

12. Composition luminescente selon la revendication 1, dans laquelle la composition luminescente est déposée en une couche sur la surface intérieure de l'ampoule de décharge de la lampe à décharge basse pression.

13. Composition luminescente selon la revendication 1, dans laquelle la composition luminescente est déposée en plusieurs couches sur la surface intérieure de l'ampoule de décharge de la lampe à décharge basse pression.
